# EUROPÄISCHE PATENTSCHRIFT

(11) **EP 0 682 742 B1**
(45) Veröffentlichungstag und Bekanntmachung des Hinweises auf die Patenterteilung: **23.10.1996**
(21) Anmeldenummer: 94905702.0
(22) Anmeldetag: 25.01.1994
(51) Int. Cl.: F01N 3/20, F01N 3/28, B01D 53/38, B01J 35/04

(54) **ELEKTRISCH BEHEIZBARER WABENKÖRPER MIT DURCH SCHLITZE ERHÖHTEM WIDERSTAND**
ELECTRICALLY HEATABLE HONEYCOMB STRUCTURE WITH ITS RESISTANCE INCREASED BY SLOTS
ELEMENTS ALVEOLES CHAUFFABLES ELECTRIQUEMENT A RESISTANCE ACCRUE PAR DES RAINURES

(30) Priorität: 08.02.1993 DE 4303601
(43) Veröffentlichungstag der Anmeldung: 22.11.1995
(73) Patentinhaber: Emitec Gesellschaft für Emissionstechnologie mbH, D-53797 Lohmar (DE)
(72) Erfinder: SWARS, Helmut, D-51429 Bergisch Gladbach (DE); BRÜCK, Rolf, D-51429 Bergisch Gladbach (DE)
(74) Vertreter: Kahlhöfer, Hermann, Dipl.-Phys.
(86) Internationale Anmeldenummer: EP9400194
(87) Internationale Veröffentlichungsnummer: WO9418439

(56) Entgegenhaltungen:
- EP-A- 0 316 596
- EP-A- 0 559 907
- WO-A-92/13635
- US-A- 5 130 208

## Beschreibung

Die Erfindung betrifft einen elektrisch beheizbaren, von einem Fluid durchströmbaren, aus gewickelten, gestapelten oder anderweitig geschichteten Blechlagen aufgebauten Wabenkörper, insbesondere zur Verwendung als Trägerkörper für einen beheizbaren katalytischen Konverter in Verbindung mit einem Verbrennungsmotor, wobei der Wert des elektrischen Widerstands einen durch den Trägerkörper fließenden elektrischen Strom beeinflußt.

Beheizbare Wabenkörper finden Anwendung als Trägerkörper für katalytische Konverter für die Abgase von Verbrennungsmotoren und insbesondere als beheizte Katalysatoren oder sog. Vorkatalysatoren. Bei der katalytischen Umsetzung von Verbrennungsabgasen ist es wichtig, daß der katalytische Konverter eine Betriebstemperatur hat, welche oberhalb einer Zündtemperatur liegt, ab welcher die exotherme katalytische Umsetzung der Verbrennungsabgase beginnt. In der Kaltstartphase eines Verbrennungsmotors besitzen der Schalldämpfer und der katalytische Konverter des Auspuffsystems noch keine ausreichend hohe Temperatur, um für eine ausreichende katalytische Umsetzung der Verbrennungsgase zu sorgen. Daher ist man im Hinblick auf den immer stärker werdenden Automobilverkehr und damit einhergehenden verschärften Abgasvorschriften bestrebt, eine nahezu vollständige katalytische Umsetzung der Verbrennungsabgase auch schon während der Kaltstartphase beim Betrieb eines Verbrennungsmotors sicherzustellen. Hierfür ist es bekannt, elektrisch beheizbare katalytische Konverter oder einem gewöhnlichen katalytischen Konverter vorgeschaltete beheizbare Vorkatalysatoren einzusetzen.

Ein solcher beheizbarer elektrischer Wabenkörper ist z. B. in der WO 92/02714 offenbart. Diese Schrift zeigt insbesondere eine Bauweise, die durch S-förmig verschlungene Stapel von Blechlagen gekennzeichnet ist. Dadurch wird eine Verlängerung des Pfades für einen durch den elektrisch beheizbaren Wabenkörper fließenden Stroms erreicht.

Weiterhin ist aus der WO 92/13635 ein Wabenkörper bekannt, der mit einer inhomogenen Stromverteilung und damit inhomogenen Wärmeleistung beheizt werden kann. Dieser Wabenkörper ist aus zumindest einem zumindest teilweise strukturierten Blech gebildet, welches lagenweise gewickelt oder geschichtet und verschlungen ist, wobei eine Vielzahl von für ein Fluid durchströmbaren Kanälen gebildet wird. In den Blechlagen ist zumindest ein elektrischer Pfad gebildet, der einen elektrischen Widerstand mit inhomogener Verteilung über die Länge einer solchen Lage hat. Diese Inhomogenität des Widerstands wird durch Schlitze erreicht, die an bestimmten Stellen der einzelnen Lagen innerhalb des gewickelten Wabenkörpers vorhanden sind. Durch das Anbringen von Schlitzen in den einzelnen Lagen vor dem Wickeln zu einem Wabenkörper kann der elektrische Widerstand des Wabenkörpers gegenüber einem aus ungeschlitzten Blechlagen bestehenden Wabenkörper erhöht werden. Mit diesen Schlitzen läßt sich somit z. B. der elektrische Widerstand eines in das Auspuffsystem eines Personenkraftwagens eingebauten elektrisch beheizbaren Vorkatalysators gezielt dimensionieren.

Weiterhin ist aus der europäischen Patentanmeldung EP 0 316 596 bekannt, Einschnitte bereits vor dem Wickeln oder Falten des Trägerkörpers unmittelbar in die Blechbänder einzubringen. So hergestellte Trägerkörper sind in der Lage, Wärmespannungen zwischen dem Mantelrohr und den darin gewickelten Blechbändern während des Betriebs abzubauen.

Um wie im zitierten Stand der Technik den elektrischen Widerstand eines beheizbaren Trägerkörpers gezielt einzurichten, müssen gezielte Schlitze oder Schlitzstrukturen in die einzelnen Blechlagen eingearbeitet werden. Bei dem anschließenden Wickeln, Stapeln oder anderweitigen Schichten der Blechlagen kommt es jedoch oftmals zu Überbrückungen derartiger Schlitze in einer Blechlage durch erhabene Stellen in einer benachbarten Blechlage, was zu unerwünschten und schwer reproduzierbaren Änderungen des elektrischen Widerstands eines solchen Trägerkörpers führt. Außerdem kann es durch derartige punktuelle "Kurzschlüsse" zu übermäßig hohen Stromdichten in diesen Bereichen kommen, was zu sehr heißen Stellen führen kann. Dieses Überbrückungsphänomen ist besonders gravierend bei auf den Blechlagen schräg in Bezug auf deren Strukturen angebrachten Schlitzen.

Für den Bau von Trägerkörpern mit vorgegebenem elektrischen Widerstand ist es zunächst wichtig, daß vor der Verarbeitung der Blechlagen zu einem Trägerkörper der Widerstand der einzelnen Blechlagen, z. B. durch Messung und Rechnung, genau bestimmt wird. Danach kann man bei vorgegebener Art des Stapelns, Wickelns oder dergleichen der einzelnen Blechlagen den zu erwartenden elektrischen Widerstand des gesamten Trägerkörpers genau vorherbestimmen. Dies ist aber nur möglich, wenn es bei der Verarbeitung der einzelnen Blechlagen zu einem Trägerkörper zu keinen unkontrollierten Überbrückungen von Schlitzen und damit verbundenen Kurzschlüssen innerhalb des hergestellten Trägerkörpers kommt.

Aufgabe der vorliegenden Erfindung ist die Schaffung eines Wabenkörpers mit wohldefiniertem, durch Öffnungen in den Blechlagen zumindest in Teilbereichen erhöhtem Widerstand.

Es ist auch Aufgabe der vorliegenden Erfindung, durch ein geeignetes Herstellverfahren mit Öffnungen versehene Blechlagen bereitzustellen, die nach ihrer Verarbeitung zu einem solchen Trägerkörper mit wohl definiertem Widerstand führen.

Dieses Ziel wird erfindungsgemäß durch die technische Lehre von Anspruch 1 erreicht.

Der elektrisch beheizbare, von einem Fluid in einer Hauptströmungsrichtung durchströmbare Wabenkörper besteht aus gewickelten, gestapelten oder anderweitig geschichteten, mindestens teilweise strukturierten Blechlagen. Diese geschichteten Blechlagen weisen zumindest ein Metallband mit Öffnungen auf, die einen elektrisch leitfähigen Pfad in dem Metallband verlängern oder verengen oder gleichzeitig verlängern und verengen, wobei die Blechlagen so strukturiert und in ihnen die Öffnungen so geformt und angeordnet sind, daß sich benachbarte Blechlagen im wesentlichen nur an Stellen berühren, wo sich keine Öffnungen des Metallbandes befinden.

Die Erfindung stellt somit sicher, daß die in den einzelnen Metallbändern durch Einbringen der Schlitze verursachten Widerstandserhöhungen bei der Verarbeitung der einzelnen Metallbänder zu einem Wabenkörper auf kontrollierte Art und Weise einen erhöhten elektrischen Widerstand des ganzen Wabenkörpers bewirken.

Der Wabenkörper enthält vorteilhafterweise spiralig oder S-förmig gewikkelte Stapel aus mehreren abwechselnd glatten und strukturierten Metallbändern. Typischerweise haben die Öffnungen in den Metallbändern die Form von Schlitzen, die in den einzelnen Metallbändern jeweils unter einem bestimmten Winkel α zu der Hauptströmungsrichtung angeordnet sind, wobei der Winkel α zwischen 0 und 45° liegt, vorzugsweise zwischen 10 und 30°.

Gemäß einem ersten Gesichtspunkt der vorliegenden Erfindung weist zumindest eines der sich berührenden Metallbänder an denjenigen Stellen, wo sich eine Öffnung befindet, eine solche Verformung auf, daß die beiden Metallbänder im Bereich der Öffnung voneinander beabstandet sind, wodurch eine leitende Überbrückung bei der Öffnung eines ersten Metallbandes durch eine Berührung mit dem zweiten Metallband vermieden wird. Die Öffnung kann in dem verformten oder dem nicht verformten Metallband sein.

Gemäß einem zweiten Gesichtspunkt der vorliegenden Erfindung wird eine leitende Überbrückung einer Öffnung eines ersten Metallbandes durch ein zweites benachbartes Metallband dadurch verhindert, daß man einen Wabenkörper bereitstellt, wobei zumindest eine mehrerer benachbarter Blechlagen an den Stellen ebenfalls eine Öffnung aufweist, wo sie ohne eine derartige Öffnung die Öffnung oder Öffnungen einer benachbarten Blechlage leitend überbrücken würde.

Gemäß einem dritten Gesichtspunkt der vorliegenden Erfindung weisen die strukturierten Metallbänder des Wabenkörpers eine periodische, insbesondere wellenförmige Struktur mit einer Periode L auf, wobei die Öffnungen in den Metallbändern mit einem Abstand A zwischen den Zentren benachbarter Öffnungen in Richtung der periodischen Struktur angeordnet sind, wobei A etwa gleich L ist, wobei die erhabenen Stellen der periodischen Struktur des strukturierten Metallbandes das andere, Metallband stets nur an Stellen zwischen den Öffnungen dieses anderen Metallbands berühren.

Gemäß einer vorteilhaften Ausgestaltung der Erfindung handelt es sich bei der periodischen Struktur der Metallbänder um eine etwa sinusförmige oder etwa trapezförmige periodische Struktur, wobei Öffnungen nur in einem ansteigenden und abfallenden Bereich, d. h. in einem Flankenbereich der periodischen Struktur vorhanden sind. Diese Anordnung der Öffnungen eignet sich besonders auch für Wabenkörper, die nur aus strukturierten Blechen ohne glatte Zwischenlagen aufgebaut sind.

Eine günstige Weiterbildung der Erfindung zeichnet sich aus durch schlitzförmige Öffnungen, die vorteilhafterweise etwa parallel zu den Strukturen in den Flankenbereichen der gewickelten, den Wabenkörper bildenden Metallbänder verlaufen.

Ein Verfahren zum Erzeugen von Schlitzen, die etwa parallel zu den erhabenen Stellen eines Metallbandes mit wellenförmiger oder trapezförmiger Struktur verlaufen, weist die folgenden Schritte auf:

Zunächst wird ein Metallband mit periodischer Struktur einer Schervorrichtung mit ebenfalls periodischer Struktur zugeführt wobei die Schervorrichtung zwei einander versetzt gegenüberliegende Scheren aufweist, die im wesentlichen ein Rechteckprofil mit einer Periode L aufweisen, die gleich der Periode L des gewellten Metallbandes ist, so daß das Metallband nur in einem ansteigenden und/oder abfallenden Bereich, d. h. einem Flankenbereich, der periodischen Struktur von der Schervorrichtung berührt wird. Daraufhin werden die beiden Scheren aufeinander zugeführt, bis das gewellte Metallband festgeklemmt ist. Anschließendes relatives Bewegen der ersten Schere zu der zweiten Schere führt zu einer Scherung des Bandmaterials, wodurch jeweils ein Schlitz in den betreffenden Flankenbereichen entsteht. Schließlich werden die beiden Scheren wieder voneinander wegbewegt und das fertige, geschlitzte Metallband freigegeben.

Weitere Vorteile, Merkmale und Anwendungsmöglichkeiten der vorliegenden Erfindung ergeben sich aus den in der Zeichnung aufgeführten Ausführungsbeispielen, auf die die Erfindung jedoch nicht beschränkt ist.

Figur 1 ist ein Querschnitt durch einen erfindungsgemäßen Wabenkörper mit S-förmig gewundenen, abwechselnd glatten und gewellten, zum Teil voneinander isolierten Blechlagen, welche einen S-förmigen Strompfad festlegen.

Figur 2 ist ein typisch strukturiertes Metallband gemäß dem Stand der Technik mit Verformungen und Öffnungen.

Figur 3 ist ein glattes Metallband mit typischen, schräg angeordneten schlitzförmigen Öffnungen.

Figur 4 zeigt ein typisches gewelltes Metallband mit Verformungen, wobei die erhabenen Stellen des Metallbands mit den schlitzfreien Bereichen des glatten Metallbandes von Figur 3 in Berührung sind, während die verformten Bereiche des gewellten Metallbandes beabstandet von den geschlitzten Bereichen des glatten Metallbandes von Figur 3 sind.

Figur 5 zeigt den Querschnitt zweier typischer benachbarter Lagen aus einem glatten und einem gewellten Metallband, wobei die Lochabstandsperiodizität in dem glatten Metallband ungefähr gleich der Wellenperiodizität des gewellten Metallbandes ist.

Figur 6 zeigt ein gewelltes Metallband mit Schlitzen nur in den Flankenbereichen des Metallbandes.

Figur 7 zeigt schematisch eine Schervorrichtung zum Erzeugen von Schlitzen in einem gewellten Metallband durch Scherwirkung.

Figur 8 zeigt das Ergebnis einer Scherwirkung der Schervorrichtung von Figur 7.

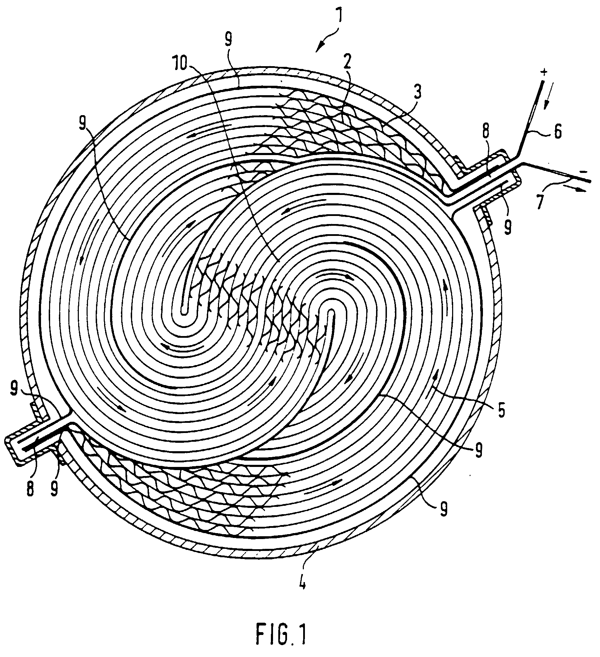

Figur 1 zeigt einen typischen Wabenkörper 1, der aus zwei Stapeln besteht, die jeweils aus sieben glatten 2 und sieben gewellten 3 Blechlagen, welche abwechselnd aufeinander angeordnet sind, gebildet ist, wobei die beiden Stapel S-förmig miteinander verschlungen sind. Die beiden verschlungenen Stapel sind durch eine Isolationsschicht 8 voneinander getrennt und befinden sich im Inneren eines Gehäuses. Die Zufuhr des Stroms 5 geschieht über eine Stromzuleitung 6, die Abfuhr des Stroms 5 geschieht durch eine Stromableitung 7. Stromverteilungsstrukturen 9 sorgen für eine gleichmäßige Verteilung der Stromdichte im Wabenkörper 1. Zunächst fließt der Strom 5 über die Stromzuleitung 6 und Stromverteilungsstrukturen 9, welche das erste Ende des ersten Stapels schnabelartig umschließen, in den ersten Stapel hinein und durchläuft einen S-förmigen Pfad, um von Stromverteilungsstrukturen 9 aufgenommen zu werden, welche das zweite Ende des ersten Stapels ebenfalls schnabelartig umschließen. Von hier aus wird der Strom erneut über Stromverteilungsstrukturen 9, welche das erste Ende des zweiten Stapels ebenfalls schnabelartig umschließen, erneut in den zweiten Stapel eingespeist, um daraufhin gegenläufig zu dem ersten S-förmigen Pfad durch den zweiten Stapel zurückzufließen, an dessen Ende er wiederum durch Stromverteilungsstrukturen 9 aufgenommen wird, welche auch das zweite Ende des zweiten Stapels schnabelartig umschließen. Von hier aus wird der Strom dann über die Durchführung durch die Stromableitung 7 nach außen abgeleitet. Ein Teil der Stromverteilungsstrukturen 9 erstreckt sich auf der der Durchführung gegenüberliegenden Seite des Gehäuses 4 in das Innere einer Kappe, wobei die Stromzuleitung 6 und die Stromableitung 7 im Inneren dieser Kappe durch eine Isolationsschicht 8 ebenso voneinander getrennt sind wie in der Durchführung. Eine Isolierung (Spalt oder Isolationsmaterial) trennt auch im Inneren des Wabenkörpers 1 Teilbereiche elektrisch voneinander. Erfindungsgemäß befinden sich in dem glatten Metallband 2 oder in dem gewellten Metallband 3 oder auch in beiden Öffnungen, insbesondere Schlitze, welche den elektrischen Widerstand der Blechlagen erhöhen, wodurch sich der elektrische Widerstand des Wabenkörpers 1 je nach der Größe und Anzahl solcher Schlitze insgesamt mehr oder weniger erhöht. Dadurch läßt sich die Leistungsaufnahme bzw. Erwärmung des Wabenkörpers 1 bei konstanter angelegter Spannung mehr oder weniger verringern und/oder auf Teilbereiche beschränken.

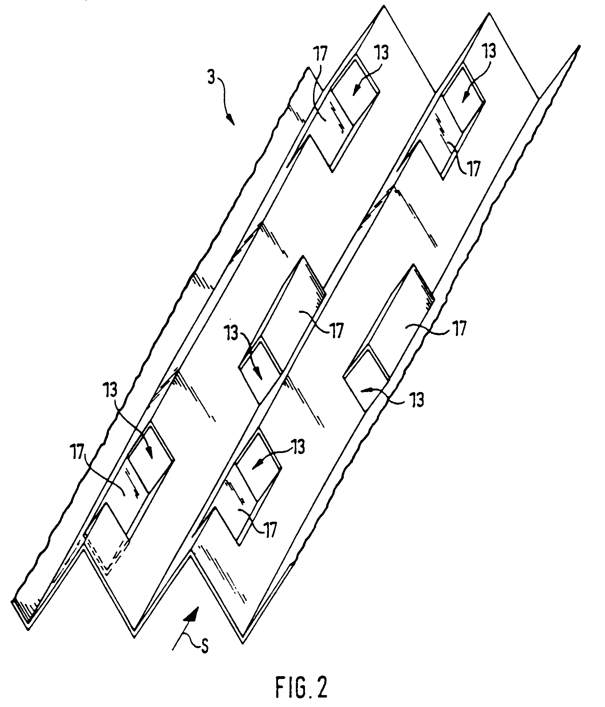

Figur 2 zeigt ein strukturiertes Metallband 3, wobei in diesem Fall die Struktur eine periodische Dreiecksstruktur ist mit Öffnungen 13 bzw. Verformungen 17. Eine derartige Struktur eines Metallbands 3 ist aus dem Stand der Technik, z. B. der US-PS 5,130,208, bekannt. Dieses Metallband 3 mit einer Dreiecksstruktur könnte auch das gewellte Metallband 3 in Figur 1 ersetzen. Durch Verformungen 17 berührt ein so strukturiertes Metallband 3 nicht überall entlang der Wellenberge bzw. Wellentäler benachbarte Lagen. Zur besseren Veranschaulichung sei auch noch angemerkt, daß eine Hauptströmungsrichtung S des durch den Wabenkörper 1 von Figur 1 strömenden Fluids in Figur 1 senkrecht zur Zeichenebene ist und in Figur 2 entlang der V-förmigen Täler verläuft. Derartige Öffnungen 13 und Verformungen 17 beeinflussen auch das Strömungsverhalten des Fluids durch den Wabenkörper 1 und dadurch auch die Umwandlungsrate der abzubauenden Abgase in dem Fluid, worauf es hier aber weniger ankommt. Die Verformungen 17 bewirken hier, daß Schlitze in benachbarten Lagen an diesen Stellen nicht elektrisch überbrückt werden.

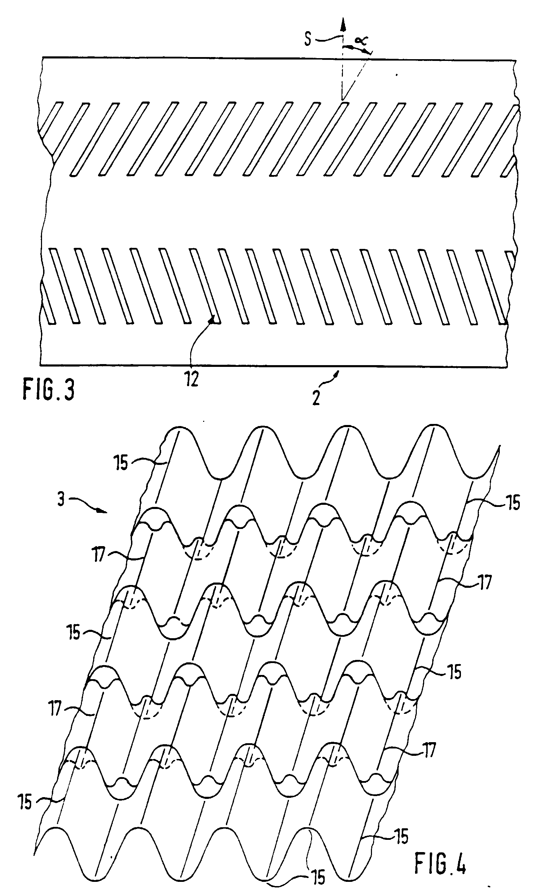

Figur 3 zeigt ein glattes 2 Metallband, welches zwei zueinander parallel verlaufende Reihen von Schlitzen 12 aufweist. Im verarbeiteten Zustand, d. h. wenn das Blech 2 gestapelt oder gewickelt im Wabenkörper 1 vorliegt, strömen Verbrennungsabgase in einer Hauptströmungsrichtung S an diesem Blech 2 vorbei, wobei die Hauptströmungsrichtung S der Verbrennungsfluide im wesentlichen senkrecht zu den langen Rändern des Blechbandes verläuft. Für die in Figur 3 gezeigten Schlitze 12 bedeutet dies, daß sie jeweils unter einem Winkel α zur Hauptströmungsrichtung S der Fluide angeordnet sind. Die Schlitze 12 in den beiden parallelen Reihen können dabei von Reihe zu Reihe in abwechselnden Richtungen zur Hauptströmungsrichtung S geneigt sein. Es ist jedoch auch denkbar, alle Schlitze in allen Reihen in die gleiche Richtung zu neigen. Außerdem ist die Anzahl der benachbarten Schlitzreihen nicht auf zwei, wie in Figur 3, begrenzt. Durch diese Anordnung zueinander paralleler Schlitzreihen wird erreicht, daß der elektrische Strom, der im wesentlichen nur in Längsrichtung des Bandes, d. h. senkrecht zur Hauptströmungsrichtung S der Fluide, fließt, und sich im Falle der in Figur 3 dargestellten Metallbandstruktur auf drei zueinander parallele Strompfade verteilt. Der eine Strompfad verläuft entlang der Mitte des Blechbandes 2 zwischen den beiden Schlitzreihen und die anderen beiden Strompfade parallel dazu entlang der oberen und unteren Ränder des Blechbandes 2. Da eine Potentialdifferenz an das Metallband 2 im Wabenkörper 1 zwischen dem in Figur 3 angedeuteten, weit links liegenden Bandende und dem weit rechts liegenden Bandende angelegt wird, besteht entlang der Blechbereiche zwischen benachbarten Schlitzen 12 in jeder der beiden Schlitzreihen nur eine geringe Potentialdifferenz, wodurch auch nur ein sehr geringer Strom fließt. Die Leistungsabgabe an das Metallband 2 und somit dessen Erwärmung findet daher in erster Linie in den beiden äußeren Randbereichen und dem mittleren Bereich des Metallbandes 2 statt. Dies ermöglicht eine gezielt inhomogene Beheizung der Metallbänder 2 und damit des Wabenkörpers 1, und es kommt insgesamt zu einer gezielten Erhöhung des elektrischen Widerstands des Wabenkörpers 1. Natürlich gleicht die Wärmeleitung und Wärmestrahlung eine inhomogene Beheizung nach kurzer Zeit weitgehend aus.

Figur 4 zeigt einen Ausschnitt aus einem gewellten Metallband 3, welches erhabene Stellen 15 besitzt, mit denen es bei der Verarbeitung zu einem Wabenkörper 1 mit dem glatten Metallband 2 von Figur 3 in den nicht geschlitzten Bereichen in Berührung kommt. Die erhabenen Bereiche 15 des gewellten Metallbandes 3 sind dabei die Berge und Täler der Wellenform. Weiterhin weist das gewellte Metallband 3 Verformungen 17 auf, durch die die erhabenen Stellen 15 umgebogen, verformt oder plattgedrückt sind, damit an der Stelle der Verformungen 17 keine Berührung zwischen einem glatten Metallband 2 und dem gewellten Metallband 3 von Figur 4 stattfinden kann. Das gewellte Metallband 3 dieses Ausführungsbeispiels weist drei benachbarte Reihen erhabener Stellen 15 auf, zwischen denen zwei Reihen weniger erhabener Stellen durch die Verformungen 17 vorliegen. In einem bevorzugten Ausführungsbeispiel der Erfindung kommt in einem Stapel jeweils ein glattes Metallband 2 gemäß Fig. 3 benachbart zu einem gewellten Metallband 3 gemäß Fig. 4 zu liegen, wobei die geschlitzten Reihen des glatten Metallbands 2 an den Stellen der Verformungen 17 des gewellten Metallbands 3 liegen.

Dadurch wird jegliche Möglichkeit einer leitenden Überbrückung der Schlitze 12 im glatten 2 Metallband durch das gewellte 3 Metallband verhindert.

In einem weiteren bevorzugten Ausführungsbeispiel ist es möglich, die Verformungen 17 in dem gewellten Metallband 3 durch Öffnungen zu ersetzen, wobei das in Figur 4 gezeigte, an der Stelle 17 verformte Blechmaterial völlig fehlen würde. In besonderen Anwendungsfällen wäre dies für eine zusätzliche Gewichtsersparnis und Materialersparnis vorteilhaft.

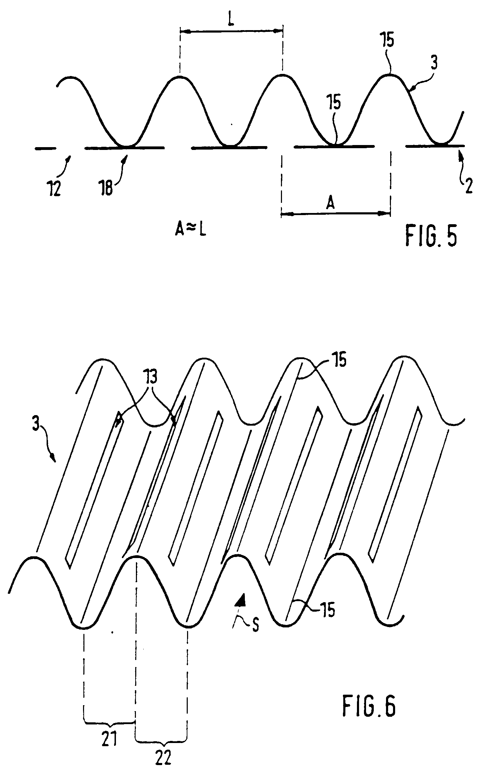

Figur 5 zeigt ein glattes Metallband 2 mit Öffnungen 12, welches von einem gewellten Metallband 3 an Berührungsbereichen 18 von den erhabenen Stellen 15 des gewellten Metallbandes 3 berührt wird. Das gewellte Metallband 2 hat eine Periode L, d. h. der Abstand benachbarter erhabener Stellen 15 ist gleich der Periode L. Der Abstand zwischen der Mitte einer Öffnung und der Mitte einer dazu benachbarten Öffnung in dem glatten Metallband 2 ist A, wobei A ungefähr gleich L ist. A kann gleich L sein, doch ist es vorteilhaft, wenn A geringfügig größer als L oder geringfügig kleiner als L ist. Dadurch wird sichergestellt, daß, selbst wenn das gewellte Band 3 in Figur 5 gegenüber dem glatten Band 2 in Figur 5 verschoben wird, es nur sehr wenige Überbrückungen der Öffnungen 12 durch erhabene Stellen 15 gibt. Dies hat z. B. den Vorteil, daß sich beim Wickeln der beiden Blechlagen 2 und 3 nur sehr wenige "Kurzschlüsse" im glatten Metallband 2 ergeben, wodurch sich der elektrische Widerstand beim Wickeln der Blechlagen von dem angestrebten elektrischen Widerstand, der sich aus den gemessenen oder berechneten Widerständen der einzelnen Blechlagen 2, 3 ergibt, kaum verändert.

Figur 6 zeigt ein gewelltes Metallband 3 mit Schlitzen 13, die ungefähr parallel zu den erhabenen Stellen 15, also den Bergen und Tälern bzw. Kämmen und Trögen der Wellenstruktur verlaufen. Dabei sind die Schlitze vorzugsweise in den ansteigenden 21 oder abfallenden 22 Bereichen des gewellten Metallbandes vorgesehen. Die schlitzförmigen Öffnungen 13 werden also vorteilhafterweise in die Flankenbereiche 21, 22 der gewellten Struktur verlegt, wodurch ein benachbartes Metallband keine Möglichkeit zur leitenden Überbrückung der Schlitze 13 hat. Es ist auch denkbar, die Schlitze nur in jedem zweiten oder dritten, etc. Flankenbereich anzubringen. Auf diese Weise besteht ebenfalls eine Möglichkeit, den elektrischen Widerstand des gewellten 3 Metallbandes gezielt einzustellen.

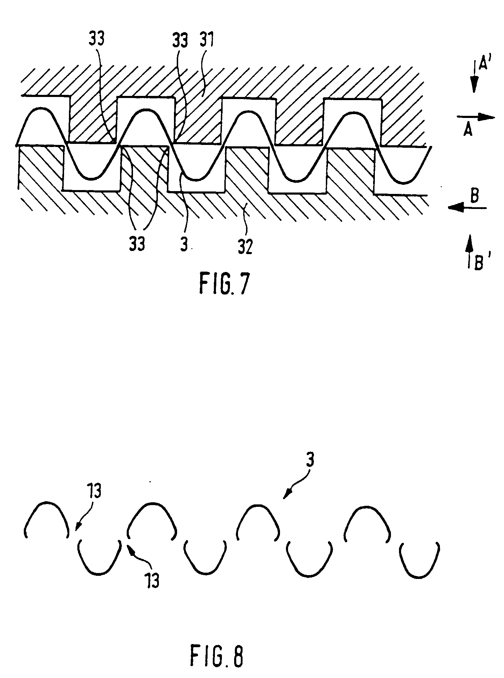

Figur 7 zeigt schematisch einen Querschnitt einer Vorrichtung zum Herstellen der erfindungsgemäßen Schlitze in einem gewellten Metallband 3. Die Vorrichtung besteht aus einer ersten 31 Schere und einer zweiten 32 Schere, welche einander gegenüberliegen, so daß gegenüberliegende Scherkanten 33 im wesentlichen parallel zueinander verlaufen. Zunächst wird das gewellte Metallband 3 zwischen die erste Schere 31 und die zweite Schere 32 zugeführt, woraufhin die beiden Scheren 31, 32 aufeinander zubewegt werden, bis das Metallband 3 durch gegenüberliegende Scherkanten festgeklemmt ist. Daraufhin können durch weiteres relatives Bewegen der ersten Schere 31 zu der zweiten Schere 32 Schlitze durch die Scherkanten 33 in dem gewellten Metallband 3 durch Scherwirkung erzeugt werden. Bewegt man dabei die erste Schere 31 und die zweite Schere 32 relativ zueinander gemäß den Pfeilen A und B, so erhält man Schlitze nur in den in Figur 7 ansteigenden 21 Bereichen des gewellten Metallbands. Bewegt man dagegen die beiden Scheren 31, 32 relativ zueinander gemäß den Pfeilen A' und B', so erhält man Schlitze in allen ansteigenden 21 und abfallenden 22 Bereichen, also jeweils einen Schlitz in jedem Flankenbereich 21, 22.

Figur 8 zeigt schematisch einen Querschnitt entlang der Ebene I-I des gewellten 3 Metallbandes von Figur 6, wobei das in Figur 7 beschriebene Verfahren gemäß Pfeilen A und B zweimal angewendet wurde, um in allen ansteigenden 21 und abfallenden 22 Bereichen einen Schlitz 13 zu erhalten.

Die Erfindung eignet sich besonders für hohen mechanischen Belastungen ausgesetzte elektrische beheizbare katalytische Konverter in Kraftfahrzeugen mit Verbrennungsmotor, deren Widerstand exakt den vorgegebenen Randbedingungen, wie Versorgungsspannung, Belastbarkeit der Batterie etc., angepaßt sein muß.

## Patentansprüche

1. Elektrisch beheizbarer, von einem Fluid in einer Hauptströmungsrichtung (S) durchströmbarer Wabenkörper (1), insbesondere zur Verwendung als Trägerkörper für einen katalytischen Konverter, aus gewickelten, gestapelten oder anderweitig geschichteten, mindestens teilweise strukturierten Blechlagen, mit mindestens einem Metallband (2, 3) mit Öffnungen (12, 13), die einen elektrisch leitfähigen Pfad in dem Metallband (2, 3) verlängern und/oder verengen,
**dadurch gekennzeichnet,**
daß die Lagen so strukturiert und die Öffnungen so geformt und angeordnet sind, daß sich benachbarte Lagen (2, 3) nur an Stellen (18) berühren, wo sich keine Öffnungen (12, 13) des Metallbandes (2, 3) befinden.

2. Wabenkörper nach Anspruch 1, dadurch gekennzeichnet, daß die Öffnungen (12, 13) in dem Metallband (2, 3) schlitzförmig ausgebildet sind.

3. Wabenkörper nach Anspruch 1 oder 2, dadurch gekennzeichnet, daß die Lagen (2, 3) aus abwechselnd glatten (2) und strukturierten (3) Metallbändern bestehen.

4. Wabenkörper nach Anspruch 1, 2 oder 3, dadurch gekennzeichnet, daß die Öffnungen (12, 13) in den Metallbändern (2, 3) Schlitze (12, 13) sind, die in den Metallbändern (2, 3) unter einem Winkel α von 0 bis 45°, vorzugsweise 10 - 30°, zu der Hauptströmungsrichtung (S) angeordnet sind.

5. Wabenkörper nach einem der vorhergehenden Ansprüche, dadurch gekennzeichnet, daß zumindest eine (3) der sich berührenden Blechlagen (2, 3) an den Stellen, wo sich eine Öffnung befindet, eine solche Verformung aufweist, daß die Lagen (2, 3) im Bereich der Öffnung voneinander beabstandet sind.

6. Wabenkörper nach Anspruch 1 bis 4, dadurch gekennzeichnet, daß zumindest eine (3) von benachbarten Blechlagen (2, 3) an den Stellen ebenfalls eine Öffnung (16) aufweist, wo sie ohne Öffnung (16) die Öffnungen (12) einer anderen benachbarten Blechlage (2) leitend überbrücken würde.

7. Wabenkörper nach Anspruch 1 oder 3, dadurch gekennzeichnet, daß die strukturierten (3) Blechlagen eine periodische, insbesondere wellenförmige Struktur mit einer Periode L aufweisen und die Öffnungen (12, 13) in den Metallbändern (2, 3) mit einem Abstand A zwischen den Zentren benachbarter Öffnungen (12, 12', 13, 13') in Richtung der periodischen Struktur angeordnet sind, wobei A etwa gleich L ist und die erhabenen Stellen (15) der periodischen Struktur der strukturierten Blechlagen (3) benachbarte Blechlagen (2) stets nur an Stellen (18) zwischen den Öffnungen (12) berühren.

8. Wabenkörper nach Anspruch 1 oder 3, dadurch gekennzeichnet, daß die periodische Struktur der Blechlagen (3) eine etwa sinusförmige oder trapezförmige periodische Struktur ist und Öffnungen (13) nur in einem ansteigenden (21) und/oder abfallenden (22) Bereich der periodischen Struktur vorgesehen sind.

9. Wabenkörper nach Anspruch 7 oder 8, dadurch gekennzeichnet, daß die Öffnungen (13) Schlitze (13) sind, die etwa parallel zu der Hauptströmungsrichtung (15) des Blechlagenbandes (3) verlaufen.

10. Verfahren zum Erzeugen von Schlitzen (13) im Blechlagenband, die etwa parallel zu den erhabenen Stellen eines Blechlagenbandes (3) mit periodischer, insbesondere etwa wellenförmiger oder trapezförmiger Struktur verlaufen für einen elektrisch beheizbaren Wabenkörper (1), wobei das Verfahren die folgenden Schritte aufweist:
a) Zuführen des Metallbandes (3) mit periodischer Struktur in eine Schervorrichtung (31, 32) mit periodischer Struktur, welche zwei einander versetzt gegenüberliegende Scheren (31, 32) aufweist, deren Periodizität gleich der der Periode L des Metallbandes (3) ist, so daß das Metallband (3) nur in einem ansteigenden (21) und/oder abfallenden (22) Bereich der periodischen Struktur von der Schervorrichtung (31, 32) berührt wird,
b) Aufeinanderzuführen der beiden Scheren (31, 32), bis das Metallband (3) festgeklemmt ist,
c) relatives Bewegen der ersten Schere (31) zu der zweiten Schere (32), wobei durch Scherung jeweils ein Schlitz in dem ansteigenden (21) und dem abfallenden (22) Bereich entsteht,
d) Voneinanderwegbewegen der Scheren (31, 32) und Ausstoßen des geschlitzen Metallbandes (3).

## Claims

1. An electrically heatable honeycomb body (1) through which a fluid can flow in a main flow direction (S), in particular for use as a carrier body for a catalytic converter, comprising at least partially structured sheet metal layers which are wound, stacked or otherwise arranged in layers, with at least one metal strip (2, 3) with openings (12, 13) which prolong and/or constrict an electrically conductive path in the metal strip (2, 3), characterised in that the layers are so structured and the openings are so formed and arranged that adjacent layers (2, 3) touch only at locations (18) where there are no openings (12, 13) in the metal strip (2, 3).

2. A honeycomb body according to claim 1 characterised in that the openings (12, 13) in the metal strip (2, 3) are of a slot configuration.

3. A honeycomb body according to claim 1 or claim 2 characterised in that the layers (2, 3) comprise alternately smooth (2) and structured (3) metal strips.

4. A honeycomb body according to claim 1, claim 2 or claim 3 characterised in that the openings (12, 13) in the metal strips (2, 3) are slots (12, 13) which are arranged in the metal strips (2, 3) at an angle α of 0 to 45°, preferably 10 to 30°, relative to the main flow direction (S).

5. A honeycomb body according to one of the preceding claims characterised in that at the locations where there is an opening at least one (3) of the sheet metal layers (2, 3) which are in contact has such a deformation that the layers (2, 3) are spaced from each other in the region of the opening.

6. A honeycomb body according to claims 1 to 4 characterised in that at least one (3) of adjacent sheet metal layers (2, 3) also has an opening (16) at the locations where without an opening (16) it would conductively bridge over the openings (12) of another adjacent sheet metal layer (2).

7. A honeycomb body according to claim 1 or claim 3 characterised in that the structured (3) sheet metal layers have a periodic and in particular corrugated structure with a period L and the openings (12, 13) in the metal strips (2, 3) are arranged with a spacing A between the centres of adjacent openings (12, 12', 13, 13') in the direction of the periodic structure, wherein A is approximately equal to L and the raised locations (15) of the periodic structure of the structured sheet metal layers (3) always only touch adjacent sheet metal layers (2) at locations (18) between the openings (12).

8. A honeycomb body according to claim 1 or claim 3 characterised in that the periodic structure of the sheet metal layers (3) is an approximately sinusoidal or trapezoidal periodic structure and openings (13) are provided only in a rising (21) and/or falling (22) region of the periodic structure.

9. A honeycomb body according to claim 7 or claim 8 characterised in that the openings (13) are slots (13) which extend approximately parallel to the main flow direction (15) of the sheet metal layer strip (3).

10. A process for producing slots (13) in the sheet metal layer strip, which extend approximately parallel to the raised locations of a sheet metal layer strip (3) with a periodic and in particular approximately corrugated or trapezoidal structure for an electrically heatable honeycomb body (1), wherein the process has the following steps:
a) feeding the metal strip (3) with a periodic structure into a shearing apparatus (31, 32) with a periodic structure, which has two shear members (31, 32) which are disposed in mutually opposite displaced relationship and whose periodicity is equal to that of the period L of the metal strip (3) so that the metal strip (3) is contacted by the shearing apparatus (31, 32) only in a rising (21) and/or falling (22) region of the periodic structure,
b) feeding the two shear members (31, 32) towards each other until the metal strip (3) is clamped fast,
c) relatively moving the first shear member (31) relative to the second shear member (32), whereby a respective slot is produced by shearing in each of the rising (21) and the falling (22) regions, and
d) moving the shear members (31, 32) away from each other and ejecting the slotted metal strip (3).

## Revendications

1. Corps alvéolaire (1), pouvant être chauffé électriquement et pouvant être traversé par un fluide selon une direction principale d'écoulement (S), notamment pour une utilisation en tant que corps formant support pour un convertisseur catalytique, constitué de couches de tôles, enroulées, empilées ou autrement superposées, au moins partiellement structurées, comportant au moins une bande métallique (2, 3) ayant des ouvertures (12, 13) qui allongent et/ou rétrécissent une voie électriquement conductrice dans la bande métallique (2, 3),
caractérisé en ce que
les couches sont structurées et les ouvertures sont formées et disposées de telle sorte que des couches voisines (2, 3) ne se touchent qu'à des endroits (18) où ne se trouve aucune ouverture (12, 13) de la bande métallique (2, 3).

2. Corps alvéolaire selon la revendication 1, caractérisé en ce que les ouvertures (12, 13) dans la bande métallique (2, 3) sont construites en forme de fentes.

3. Corps alvéolaire selon la revendication 1 ou 2, caractérisé en ce que les couches (2, 3) sont constituées de bandes métalliques alternativement lisses (2) et structurées (3).

4. Corps alvéolaire, selon la revendication 1, 2 ou 3, caractérisé en ce que les ouvertures (12, 13) dans les bandes métalliques (2, 3) sont des fentes (12, 13) qui sont disposées dans les bandes métalliques (2, 3) selon un angle a compris entre 0 et 45°, de préférence entre 10 et 30°, par rapport à la direction principale d'écoulement (S).

5. Corps alvéolaire selon l'une des revendications précédentes, caractérisé en ce que au moins une (3) des couches de tôles (2, 3) qui se touchent comporte une telle déformation aux endroits où se trouve une ouverture que les couches (2, 3) sont à une certaine distance l'une de l'autre dans la zone de l'ouverture.

6. Corps alvéolaire selon une des revendications 1 à 4, caractérisé en ce que au moins une (3) des couches de tôles (2, 3) voisines comporte également une ouverture (16) aux endroits où, sans ouverture (16), elle court-circuiterait de façon conductrice les ouvertures (12) d'une autre couche de tôles (2) voisine.

7. Corps alvéolaire selon la revendication 1 ou 3, caractérisé en ce que les couches de tôles structurées (3) ont une structure périodique, notamment en forme d'onde, avec une période L et les ouvertures (12, 13) dans les bandes métalliques (2, 3) sont disposées suivant la structure périodique avec une distance A entre les centres d'ouvertures (12, 12', 13, 13') voisines, A étant approximativement égal à L et les endroits convexes (15) de la structure périodique des couches de tôles structurées (3) ne touchant toujours des couches de tôles (2) voisines qu'en des endroits (18) situés entre les ouvertures (12).

8. Corps alvéolaire selon la revendication 1 ou 3, caractérisé en ce que la structure périodique des couches de tôles (3) est une structure périodique à peu près en forme de sinusoïde ou de trapèze et des ouvertures (13) ne sont prévues que dans une zone montante (21) et/ou descendante (22) de la structure périodique.

9. Corps alvéolaire selon la revendication 7 ou 8, caractérisé en ce que les ouvertures (13) sont des fentes (13) qui s'étendent à peu près parallèlement à la direction principale d'écoulement (15) de la bande de couche de tôles (3).

10. Procédé de fabrication de fentes (13) dans la bande de couche de tôles, lesquelles fentes s'étendent à peu près parallèlement aux endroits convexes d'une bande de couche de tôles (3) ayant une structure périodique, notamment à peu près en forme d'onde ou de trapèze, pour un corps alvéolaire (1) qui peut être chauffé électriquement, le procédé comportant les étapes suivantes :
a) on amène la bande métallique (3) à structure périodique dans une machine à cisailler (31, 32) à structure périodique qui comporte deux cisailles (31, 32) qui sont opposées et décalées l'une par rapport à l'autre et dont la périodicité est égale à celle de la période L de la bande métallique (3), de sorte que la bande métallique (3) n'est touchée par la machine à cisailler (31, 32) que dans une zone montante (21) et/ou descendante (22) de la structure périodique,
b) on superpose les deux cisailles (31, 32) jusqu'à coincer la bande métallique (3),
c) on provoque un mouvement relatif de la première cisaille (31) par rapport à la seconde cisaille (32), une fente se créant à chaque fois par cisaillement dans la zone montante (21) et dans la zone descendante (22),
d) on écarte l'une de l'autre les deux cisailles (31, 32) et on enlève la bande métallique (3) fendue.
